(19) Europäisches Patentamt
European Patent Office
Office européen des brevets

(11) **EP 4 443 208 A1**

(12) **EUROPEAN PATENT APPLICATION**

(43) Date of publication:
**09.10.2024 Bulletin 2024/41**

(21) Application number: **24165082.9**

(22) Date of filing: **21.03.2024**

(51) International Patent Classification (IPC):
**G02B 6/12** (2006.01)   **G02B 6/125** (2006.01)
**G06N 10/40** (2022.01)

(52) Cooperative Patent Classification (CPC):
**G02B 6/12002; G02B 6/125; G06N 10/00; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.03.2023 GB 202304367**

(71) Applicant: **QuiX Quantum BV
7521 AN Enschede (NL)**

(72) Inventors:
• **VLEESHOUWERS, Ward Lucas
7521 AN Enschede (NL)**
• **SMITH, Devin Hugh
7521 AN Enschede (NL)**

(74) Representative: **CMS Cameron McKenna Nabarro Olswang LLP
Cannon Place
78 Cannon Street
London EC4N 6AF (GB)**

(54) **LAYERED OPTICAL QUANTUM CIRCUIT**

(57)   An optical quantum circuit comprising a substrate; a first plurality of waveguides formed on a first layer of the substrate and a second plurality of waveguides formed on a second layer of the substrate wherein at least some of the waveguides in the first plurality of waveguides are configured formed to interface, in a pairwise fashion, such that in a at least first some interaction stages each of a at least first some of the first plurality of waveguides interface with a neighbouring waveguide in the first plurality of waveguides; and in a at least second some of the interaction stages each of a at least second some of the first plurality of waveguides interface with an adjacent waveguide of the second plurality of waveguides.

FIG. 1

## Description

### Background

Optical quantum circuits with pairwise interactions can be used for a variety of purposes. For example, such circuits can be used to form gate-based optical quantum computers or to form multiport optical interferometers. However, in general such optical quantum circuits are formed using waveguides on a substrate and are thus limited in connectivity. When the optical quantum circuit is used for gate-based quantum computing this can limit which qubits (each of which may be travelling in a separate waveguide) can interact at any point since only neighbouring waveguides can be configured to interface. In addition, when forming multiport interferometers this limits the connectivity of the interferometer and generally results in very few paths between the first and last waveguide of the multiport interferometer, often as low as a single path. This can lead to an increased sensitivity to errors in paths with limited connectivity limiting the useability of the multiport interferometer. In addition, when manufacturing a multiport interferometer, manufacturing errors can sometimes lead to an absence of an optical coupling between waveguides. In current schemes for multiport interferometers this prevents light being coupled between the first and last waveguide of the interferometer and thus further reduces usability of the interferometer. Thus, it would be desirable to provide optical quantum circuits including multiport interferometers with increased connectivity.

The embodiments described below are not limited to implementations which solve any or all of the disadvantages of known optical quantum circuits.

### Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A first aspect provides an optical quantum circuit comprising: a substrate; a first plurality of waveguides formed on a first layer of the substrate wherein the first plurality of waveguides connect a first plurality of input ports to a first plurality of output ports; and a second plurality of waveguides formed on a second layer of the substrate wherein the second plurality of waveguides connect a second plurality of input ports to a second plurality of output ports. At least some of the waveguides in the first plurality of waveguides are formed to interface, in a pairwise fashion, with another waveguide from the first or second plurality of waveguides in each of a plurality of interaction stages arranged between the first and second plurality of input ports and the first and second plurality of output ports, such that: in a at least first some interaction stages of the plurality of interaction stages each of a at least first some waveguides of the first plurality of waveguides interface with a respective neighbouring waveguide of the first plurality of waveguides, wherein each of the at least first some waveguides of the first plurality of waveguides is in the same layer as the respective neighbouring waveguide of the first plurality of waveguides or, in other words, is within the layer of the respective neighbouring waveguide of the first plurality of waveguides. In a at least second some interaction stages of the plurality of interaction stages each of a at least second some waveguides of the first plurality of waveguides interface with a respective adjacent waveguide of the second plurality of waveguides, wherein the respective adjacent waveguide of the second plurality of waveguides is formed on the second layer to be a neighbouring waveguide to the corresponding waveguide from the at least second some waveguides of the first plurality of waveguides on the first layer. This provides an optical quantum circuit with increased connectivity. This increases the versatility of the optical quantum circuit by enabling the formation of more connected multiport interferometers and enabling a second layer to be used to transport qubits in a gate-based mode of optical quantum computing etc.

In one example, at least some of the waveguides in the second plurality of waveguides are formed to interface, in a pairwise fashion, with another waveguide from the second plurality of waveguides in each of a plurality of interaction stages arranged between the second plurality of input ports and the second plurality of output ports such that: in a at least third some interaction stages of the plurality of interaction stages each of a at least first some waveguides of the second plurality of waveguides interface with a respective neighbouring waveguide of the second plurality of waveguides, wherein each of the at least first some waveguides of the second plurality of waveguides is in the same layer as the respective neighbouring waveguide of the second plurality of waveguides or, in other words, is within the layer of the respective neighbouring waveguide of the second plurality of waveguides.

An example provides an optical quantum circuit comprising: a substrate; a first plurality of waveguides formed on a first layer of the substrate wherein the first plurality of waveguides connect a first plurality of input ports to a first plurality of output ports; and a second plurality of waveguides formed on a second layer of the substrate wherein the second plurality of waveguides connect a second plurality of input ports to a second plurality of output ports. At least some waveguides in the first and second plurality of waveguides are formed to interface, in a pairwise fashion, with another waveguide from the first or second plurality of waveguides in each of a plurality of interaction stages arranged between the first and second plurality of input ports and the first and second plurality of output ports, such that: in a at least first some interaction stages of the plurality of interaction stages each of a at least first some waveguides of the first plurality of waveguides interface with a neighbouring waveguide of the first plurality of waveguides; in a at least second some interaction stages of the plurality of interaction stages each of a at least first some waveguides of the second plurality of waveguides interface with a neighbouring waveguide of the second plurality of waveguides; and in a at least third some interaction stages of the plurality of interaction stages each of a at least second some waveguides of the first plurality of waveguides interface with an adjacent waveguide of the second plurality of waveguides. This provides an optical quantum circuit with increased connectivity. This increases the versatility of the optical quantum circuit by enabling the formation of more connected multiport interferometers and enabling a second layer to be used to transport qubits in a gate-based mode of optical quantum computing etc.

In one example, the optical quantum circuit further comprises one or more further pluralities of waveguides wherein each of the one or more further pluralities of waveguides are formed on a separate respective layer of the substrate and each of the one or more further pluralities of waveguides connect a plurality of input ports for that plurality of waveguides to a plurality of output ports for that plurality of waveguides. At least some of each of the one or more further plurality of waveguides are configured to interface, in a pairwise fashion, with another waveguide from either (a) the respective one or more further plurality of waveguide on the respective layer or (b) the plurality of waveguides formed on a neighbouring layer to the respective layer in each of a plurality of interaction stages arranged between the plurality of input ports and the plurality of output ports, such that: in a first respective at least some interaction stages of the plurality of interaction stages each of a at least first some waveguides in the respective plurality of waveguides on the respective layer interface with a neighbouring waveguide from the respective plurality of waveguides on the respective layer; and in a second respective at least some interaction stages of the plurality of interaction stages each of a at least second some waveguides in the respective plurality of waveguides interface with an adjacent waveguide of the plurality of waveguides formed on the neighbouring layer to the respective layer. Hence, the above example is not limited to optical quantum circuits on two layers and further connectivity can be achieved. This enables the wrapping of optical quantum circuits and the building of larger optical quantum circuits within a limited spatial area.

In some examples, at least some of the at least first some interaction stages are the same interaction stages as at least some of the at least second some interaction stages. In other examples at least some of the at least first some interaction stages are the same interaction stages as at least some of the at least third some interaction stages; and/or at least some of the at least second some interaction stages are the same interaction stages as at least some of the at least third some interaction stages. Thus, pairs of waveguides can interface between layers at the same interaction stages at which other pairs of waveguides are interfacing within a layer. This enables full versatility in the optical quantum circuits produced and is useful when using the optical quantum circuit as a multiport interferometer.

In some examples, the first plurality of waveguides and the second plurality of waveguides interface with each other in the pairwise fashion via beam splitters which can be variable beam splitters or 50/50 beam splitters, such that: the at least first some waveguides of the first plurality of waveguides interface with the neighbouring waveguide of the first plurality of waveguides via a beam splitter; the at least first some waveguides of the second plurality of waveguides interface with the neighbouring waveguide of the second plurality of waveguides via a beam splitter; and the at least second some waveguides of the first plurality of waveguides interface with the adjacent waveguide of the second plurality of waveguides via a beam splitter. Using beam splitters, such as variable beam splitters, is a convenient and controllable way to interface waveguides.

In some examples, each variable beam splitter comprises: a first 50/50 directional coupler that couples each of a first and a second waveguide configured to interface at the variable beam splitter; a second 50/50 directional coupler that couples each of the first and the second waveguide configured to interface at the variable beam splitter; and a phase shifter formed in at least one of the first or the second waveguide configured to interface at the variable beam splitter, wherein the phase shifter is between the first 50/50 directional coupler and the second 50/50 directional coupler. This provides a convenient way for producing a variable beam splitter.

In some examples, the optical quantum circuit comprises a multiport interferometer; the waveguides in the first and second plurality of waveguides are numbered consecutively from 1 to N where N is a positive integer; at each of a first set of interaction stages, the waveguide numbered 2j+1 interfaces with a waveguide numbered 2j+2 for $j = 0, 1 \dots \frac{N}{2} - 1$; and at each of a second set of interaction stages different from the first set of interaction stages, the waveguide numbered 2j interfaces with a waveguide numbered 2j+1 modulo N for $j = 1, 2 \dots \frac{N}{2}$. This provides a multiport interferometer with improved connectivity. In particular, this provides a multiport interferometer where there are additional interfaces between the first and Nth waveguides. This increases the number of paths between the 1st and Nth waveguides and reduces the susceptibility of the multiport interferometer to errors and thus increases its useability and versatility. In these examples, the first plurality of waveguides formed on the first layer can be numbered from 1 to N/2 wherein N/2 is a positive integer; and the second plurality of waveguides formed on the second layer can be numbered from N/2+1 to N. Splitting the waveguides equally between the two layers enables an efficient use of space and division of waveguides. In some cases the waveguide numbered N is formed on the second layer adjacent to the waveguides numbered 1 on the first layer, and the waveguide numbered N/2+1 is formed on the second layer adjacent to the waveguides numbered N/2 on the first layer. This ensures a short optical path between waveguides that connect between layers thus reducing loss. In some cases the waveguides numbered N-k+1 are formed on the second layer adjacent to the waveguides numbered k on the first layer for

$$k = 1,2 \dots \frac{N}{2}$$

. This provides a convenient alignment of waveguides where waveguides that connect between layers are formed adjacent to each other on the layers enabling a short optical path connection between these waveguides.

In some examples, the optical quantum circuit comprises a multiport interferometer; the waveguides interface with each other in a pairwise fashion via variable beam splitters; the first, second and one or more further plurality of waveguides combined comprise N waveguides formed over the first, second and one or more separate respective layers; at each of a first set of interaction stages, the waveguide numbered 2j+1 interfaces with a waveguide numbered 2j+2 for

$$j = 0,1 \dots \frac{N}{2} - 1$$

; and at each of a second set of interaction stages different from the first set of interaction stages, the waveguide numbered 2j interfaces with a waveguide numbered 2j+1 modulo N for $j = 1,2 \dots \frac{N}{2}$.
This provides a multiport interferometer with the improved connectivity of the multiport interferometer above but over several layers. This enables a large multiport interferometer to be formed in a smaller space.

In some examples where the optical quantum circuit is a multiport interferometer the plurality of interaction stages are numbered from 1 to p; and either the first set of interaction stages are odd numbered interaction stages, and the second set of interaction stages are even numbered interaction stages; or the first set of interaction stages are even numbered interaction stages, and the second set of interaction stages are odd numbered interaction stages. This provides additional structure to the multiport interferometer.

In some examples, configuring the first plurality of waveguides and the second plurality of waveguides to interface with each other comprises, at each interaction stage of the plurality of interaction stages: narrowing each waveguide configured to interface at that interaction stage. In other examples configuring the first plurality of waveguides and the second plurality of waveguides to interface with each other comprises, at each interaction stage of the plurality of interaction stages: for each pair of waveguides that are configured to interface at that interaction stage, reducing the gap between the waveguides in the pair, wherein when a first waveguide of the first plurality of waveguides is configured to interface with a second waveguide of the second plurality of waveguides, a gap between the first and second waveguide is reduced by bringing the first and second waveguide towards each other using vertical tapering. These examples provide techniques for interfacing waveguides.

In some examples, the optical quantum circuit further comprises at least one phase shifter formed in a waveguide of the first plurality of waveguides; and /or at least one phase shifter formed in a waveguide of the second plurality of waveguides. This increases the versatility and useability of the optical quantum circuit by enabling the introduction of other optical elements and components.

A second aspect provides a method of forming an optical quantum circuit, the method comprising: forming, using lithography, a first plurality of waveguides on a first layer of a substrate, wherein each waveguide of the first plurality of waveguides connects an input port to an output port, and wherein a at least first some of the first plurality of waveguides are formed to interface with a neighbouring waveguide of the first plurality of waveguides in a at least first some interaction stages of a plurality of interaction stages arranged between the input ports and output ports; and forming, using lithography, a second plurality of waveguides on a second layer of the substrate, wherein each waveguide of the second plurality of waveguides connects an input port to an input port, and wherein a at least first some of the second plurality of waveguides are formed to interface with a neighbouring waveguide of the second plurality of waveguides in a at least second some interaction stages of the plurality of interaction stages. Forming the first plurality of waveguides and the second plurality of waveguides comprises forming a at least second at least some of the first plurality of waveguides to interface with an adjacent waveguide in the second plurality of waveguides in a at least third some interaction stages of the plurality of interaction stages. Hence, this provides a method of forming an optical quantum circuit such as the one defined above.

In some examples, the method further comprises forming, using lithography, one or more further pluralities of waveguides, wherein each of the one or more further pluralities of waveguides is formed on a separate respective layer of the substrate, wherein each waveguide of the one or more further pluralities of waveguides connects an input port to an output port, and a least first some of each of the one or more further pluralities of waveguides are formed to interface with a neighbouring waveguide from the respective plurality of waveguides in a at least first respective some interaction stages. Forming the one or more further pluralities of waveguides comprises forming a at least second respective some of each plurality of waveguides on a respective layer to interface with an adjacent waveguide of the plurality of waveguides formed on a neighbouring layer to the respective layer in a at least second respective some interaction stages. Hence, the above method can also be used to form optical quantum circuits over more than two layers.

In some examples, forming each of the at least first some of the first plurality of waveguides to interface with the neighbouring waveguide and forming each of the at least first some of the second plurality of waveguides to interface with the neighbouring waveguide comprises: narrowing each of the at least first some waveguides and each of the neighbouring waveguides at the interaction stage at which the waveguides interface; and/or reducing a separation between each of the least first some waveguides and the respective neighbouring waveguide at the interaction stage at which the waveguides interface. In some examples, forming the at least second some of the first plurality of waveguides to interface with the adjacent waveguide of the second plurality of waveguides comprises: narrowing each of the at least second some of the first plurality of waveguides and each of the adjacent waveguides at the interaction stage at which the waveguides interface; and/or reducing a separation between each of the least second some of the first plurality of waveguides and the respective adjacent waveguide of the second plurality of waveguides using vertical tapering. These examples provide examples methods by which a skilled person can form waveguides to interface with one another.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1 shows an example optical quantum circuit formed over two layers;

Figure 2 shows a Mach Zehnder interferometer that can be used to enable two waveguides to interface;

Figure 3 shows an example multiport interferometer formed across layers with the layers depicted side-by-side;

Figure 4 shows an example multiport interferometer formed across layers with the layers depicted overlapping;

Figure 5 shows another example multiport interferometer formed across layers with the layers depicted overlapping; and

Figure 6 shows a method for forming a multilayer optical quantum circuit.

Common reference numerals are used throughout the figures to indicate similar features.

Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

One form of optical quantum circuit comprises a plurality of waveguides formed on a substrate. The waveguides interact/interface with each other in a pairwise fashion at a plurality of points throughout the optical quantum circuit that can be referred to as interaction stages. The interaction stages can also be referred to as interaction steps, interaction points, interface stages, interface steps or interface points etc. The interaction stages can also be referred to as time steps, since when light is travelling in the waveguides, it will be subject to each interaction stage that the particular waveguide undergoes sequentially. At an interaction stage light travelling in a first waveguide of a pair of waveguides interfaces/interacts with light travelling in a second waveguide of the pair of waveguides. An interaction stage can be an interface point for multiple pairs of waveguides. Thus, at a particular interaction stage a first pair of waveguides can interface with each other and a second pair of waveguides can interface with each other etc. Optical quantum circuits with pairwise interactions can take multiple forms such as an interferometer, a gate-based optical quantum computer, an all-to-all routing network or an optical neural net. In some examples, when the optical quantum circuit is an interferometer, each interaction stage can comprise a point at which two waveguides interface with each other via a variable beam splitter. In another example, when the optical quantum circuit takes the form of a gate-based optical quantum computer each interaction stage can comprise a two-qubit entangling gate. The light that travels through such optical quantum circuits can also take various forms dependent upon how the optical quantum circuit is being used. For example, the light can take the form of single photons, squeezed light states, Gaussian states and non-Gaussian states.

Previously, when waveguides have been used to form optical quantum circuits with pairwise interactions, the waveguides have all been formed on the same layer and the interaction stages are within layer interaction stages. However, this leads to limited optical connectivity since each waveguide can only be configured to interface with a neighbouring waveguide. In examples where the optical quantum circuit is an interferometer, this can lead to very limited connectivity between an input port of the first waveguide in the optical quantum circuit and an output port of the final waveguide in the optical quantum circuit. This limited connectivity can make it difficult to send light from the input port of the first waveguide to the output port of the final waveguide without high quality beam splitters with low reflectivities. This can limit the usability of the interferometer for applications such as optical switching and can have an impact on any calculations when using the interferometer for quantum computing. In examples where the optical quantum circuit is used as a gate-based optical quantum computer, this can make it difficult to achieve entanglement between the necessary qubits and make designing a circuit complex.

This application relates to an optical quantum circuit formed over a plurality of layers wherein the plurality of layers are layers of a substrate. The optical quantum circuit comprises a plurality of waveguides wherein the plurality of waveguides are distributed across the multiple layers. The waveguides are arranged such that at a particular interaction stage, a particular waveguide can interface either with another waveguide in the same layer or a waveguide from an adjacent layer. In some examples, all waveguides may interface with another waveguide at each interaction stage. In other examples, only some of the waveguides may interface with another waveguide at each interaction stage. At each interaction stage there can be pairs of waveguides interfacing between layers and pairs of waveguides interfacing within each layer.

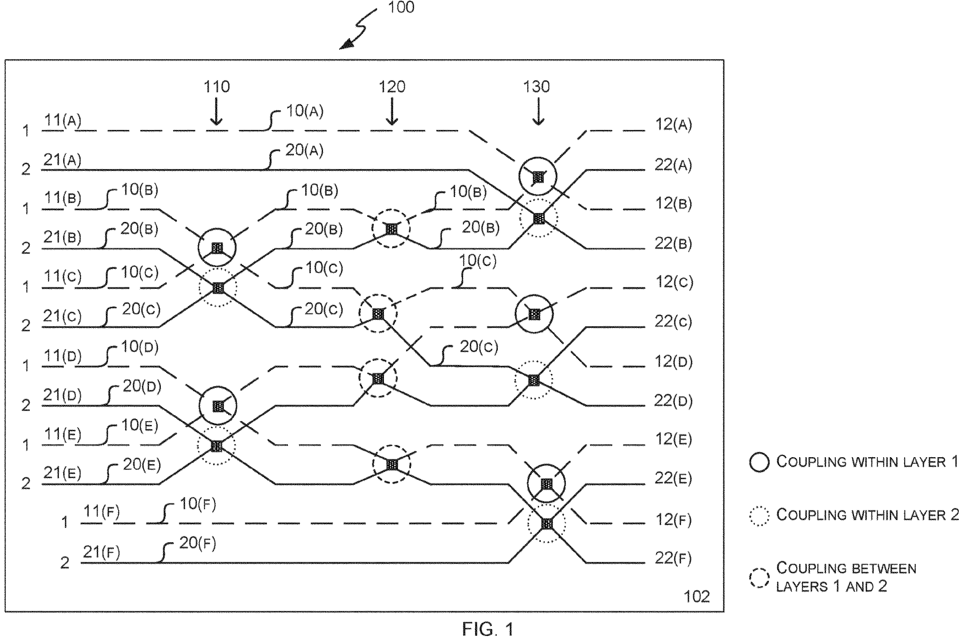

Figure 1 shows an example optical quantum circuit 100 formed across two layers 1, 2 of a substrate 102. The optical quantum circuit 100 shown in Figure 1 is purely an example to show how waveguides can be configured to interface both within a layer and between layers and the arrangement of waveguides in this Figure should not be considered limiting. The optical quantum circuit 100 comprises a first plurality of waveguides 10 formed on a first layer 1 of the substrate 102. The first plurality of waveguides 10 connect a first plurality of input ports 11 to a first plurality of output ports 12. Each waveguide of the first plurality of waveguides 10 connects an input port of the first plurality of input ports 11 to an output port of the first plurality of output ports 12. In some examples, the number of waveguides in the first plurality of waveguides 10, the number of input ports in the first plurality of input ports 11 and the number of output ports in the first plurality of output ports 12 is the same. The optical quantum circuit 100 further comprises a second plurality of waveguides 20 formed on a second layer 2 of the substrate 102. The second plurality of waveguides 20 connect a second plurality of input ports 21 to a second plurality of output ports 22. Each waveguide of the second plurality of waveguides 20 connects an input port of the second plurality of input ports 21 to an output port of the second plurality of output ports 22. In some examples, the number of waveguides in the second plurality of waveguides 20, the number of input ports in the second plurality of input ports 21 and the number of output ports in the second plurality of output ports 22 is the same. The number of waveguides in the first plurality of waveguides 10 can be the same as or different to the number of waveguides in the second plurality of waveguides 20.

As shown in the Figure 1, the waveguides in the first plurality of waveguides 10 and the second plurality of waveguides 20 can be configured to interface in a pairwise fashion at a plurality of interaction stages 110, 120, 130. The plurality of interaction stages are positioned between the input ports in the first 11 and second 21 plurality of input ports and the output ports in the first 12 and second 22 plurality of output ports. Hence, when light is travelling through the plurality of waveguides in the first 10 and second 20 plurality of waveguides, the light passes through the interaction stages between an input port and an output port. Methods for configuring the waveguides to interface with each other are discussed in more detail later.

At each interaction stage 110, 120, 130 a waveguide can be configured to interface with one of (a) no other waveguides; (b) a waveguide in the same layer; or (c) a waveguide in the other layer. Hence, in each of a plurality interaction stages 110, 120, 130 each of at least some of the waveguides in the first 10 and second 20 plurality of waveguides 10 is configured to interface, in a pairwise fashion, with another waveguide from the first 10 or second 20 plurality of waveguides.

In a at least first some of the plurality of interface stages 110, 120, 130, each of a at least first some waveguides in the first plurality of waveguides 10 is configured to interface with a neighbouring waveguide from the first plurality of waveguides 10. A neighbouring waveguide can be a nearest neighbour waveguide within the layer. Hence, the neighbouring waveguide can be the nearest waveguide to the waveguide under consideration within the layer and in a particular direction. A waveguide can have different nearest waveguides in different directions. For example, as shown in Figure 1, waveguide 10(c) has nearest neighbour waveguides 10(b) and 10(d) within layer 1. Figure 1 shows some example interfaces between waveguides in layer 1. For example, in Figure 1 in interaction stage 110, waveguide 10(b) in the first plurality of waveguides 10 interfaces with waveguide 10(c) in the first plurality of waveguides 10 and waveguide 10(d) in the first plurality or waveguides 10 interfaces with waveguide 10(e) in the first plurality of waveguides 10. The waveguides to interface at any particular interaction stage is determined by the use of the optical quantum circuit 100 and varies between different optical quantum circuits 100. For a multiport interferometer this will be determined based on the connectivity of the multiport interferometer. For a gate-based optical quantum circuit this will be determined based on the circuit being implemented. The skilled person would understand how to determine the connectivity based on the design of the optical quantum circuit.

In a at least second some of the plurality of interaction stages 110, 120, 130, each of a at least first some waveguides in the second plurality of waveguides 20 is configured to interface with a neighbouring waveguide from the second plurality of waveguides 20. The at least first and second some of the plurality of interaction stages can comprise the same interaction stages. In other words, the at least first some waveguides of the first plurality of waveguides 10 can interface with a neighbour waveguide from the first layer 1 at the same "time" as the at least first some waveguides of the second plurality of waveguides 20 interface with a neighbouring waveguide from the second layer 2. In other examples, the at least first and second some of the plurality of interaction stages can be different. In a further example some of the at least first some of the plurality of interaction stages can be the same as some of the at least second some of the plurality of interaction stages. In other words, in some interaction stages each of the at least first some waveguides in the first plurality of waveguides 10 can interface with a neighbouring waveguide in the first layer 1 (and the first plurality of waveguides 10) and each of the at least first some waveguides in the second plurality of waveguides 20 can interface with a neighbouring waveguide in the second layer 2 (and the second plurality of waveguides 20). However, in other interaction stages only the at least first some waveguides in the first plurality of waveguides 10 interface with a neighbouring waveguide or only the at least first some waveguides in the second plurality of waveguides 20 interface with a neighbouring waveguide. Figure 1 shows some example interfaces between waveguides in layer 2. For example, in Figure 1 in interaction stage 110, waveguide 20(b) in the second plurality of waveguides 20 interfaces with waveguide 20(c) in the second plurality of waveguides 20 and waveguide 20(d) in the second plurality or waveguides 20 interfaces with waveguide 20(e) in the second plurality of waveguides 20. As above, the waveguides to interface at any particular interaction stage is determined by the use of the optical quantum circuit 100.

In a at least third some of the interaction stages 110, 120, 130, each of a at least second some waveguides in the first plurality of waveguides 10 interface with a waveguide from the second plurality of waveguides 20. The waveguide from the second plurality of waveguides 20 that a respective waveguide in the at least second some waveguides of the first plurality of waveguides 20 interfaces with is considered to be an adjacent waveguide. This is because the waveguide from the second plurality of waveguides 20 is formed on the second layer 2 such that it is a neighbouring waveguide to the waveguide from the at least second some waveguides from the first plurality of waveguides on the first layer 1. This can involve the waveguide from the second plurality of waveguides 20 being formed directly above the waveguide from the first plurality of waveguides 10. However, this could also involve the waveguide on the second layer 2 being above but displaced from the waveguide on the first layer 1 and the waveguide on the second layer 2 being a nearest waveguide in at least one direction to the waveguide on the first layer 1. A waveguide on the first layer 1 can have two nearest waveguides on the second layer 2, one on each side. For example, waveguide 10(c) on the first layer 1 is nearest to waveguide 20(b) on the second layer 2 on one side and waveguide 20(c) on the second layer 2 on the other side. Figure 1 shows some example interfaces of waveguides between layers. For example, in interaction stage 120 waveguide 10(b) from layer 1 interfaces with waveguide 20(b) from layer 2, waveguide 10(c) from layer 1 interfaces with waveguide 20(c) from layer 2, waveguide 10(d) from layer 1 interfaces with waveguide 20(d) from layer 2 and waveguide 10(e) from layer 1 interfaces with waveguide 20(e) from layer 2. As above, the waveguides to interface at any particular interaction stage is determined by the use of the optical quantum circuit 100.

In some examples, the at least third some interaction stages can be the same interaction stages as either one or both of the at least first some interaction stages and the at least second some interaction. Hence, there can be waveguides interfacing between layers at the same time as other waveguides interface within a layer. Since the interfacing occurs in a pairwise fashion, at each interaction stage, a single waveguide can only interface within a layer or between layers (or not at all) rather than both. In other examples, some of the at least third some interaction stages are the same interaction stages as at least some of the at least first some and/or at least some of the at least second some interaction stages. Hence, in some interaction stages waveguides interface between layers while other waveguides interface within a layer while in other interaction stages waveguides may only interface within a layer or waveguides may only interface between layers. In yet other examples, the at least third some interaction stages can differ from the at least first and second some interaction stages so in each interaction stages waveguides only interface between or within layers. As above, the waveguides that interface at any particular interaction stage are determined based on the use and design of the optical circuit 100.

In at least some of the examples discussed above, the at least first some waveguides in the first plurality of waveguides 10 in the first layer 1 interface with each other in the at least first some of the plurality of interaction stages 110, 120, 130 with this interfacing occurring within the first layer 1 and the at least first some waveguides in the second plurality of waveguides 20 in the second layer 2 interface with each other in the at least second some of the plurality of interaction stages 110, 120, 130 with this interfacing occurring the second layer 2. In addition, each of the at least second some waveguides in the first plurality of waveguides 10 interface with a waveguide from the second plurality of waveguides 20 in the at least third some of the interaction stages 110, 120, 130 with this interfacing occurring between the first layer 1 and the second layer 2. Thus, waveguides in both the first layer 1 and second layer 2 interface with other waveguides in the respective layer and waveguides also interface between layers. However, in other examples, only first and third interaction stages 110, 120, 130 may be present. In this example, the at least third some interaction stages may be referred to as an at least second some interaction stages. Thus, while in at least a first some of the plurality of interaction stages 110, 120,130 each of the at least first some waveguides in the first plurality of waveguides 10 are configured to interface with a neighbouring waveguide from the first plurality of waveguides 10 within the first layer 1, the waveguides on the second layer 2 do not interface with each other. Then in the at least third (or second) some of the interaction stages 110, 120, 130, each of the at least second some waveguides in the first plurality of waveguides 10 in the first layer 1 interface with a waveguide from the second plurality of waveguides 20 in the second layer 2. In this example, there are interactions between waveguides within a one layer or within a single layer e.g. the first layer 1 and between layer 1 and layer 2. Limiting interactions/interfaces to be between layers and within one layer of the multiple layers can make it easier to form the necessary quantum circuit. Having interactions/interfaces be within one layer can also be referred to as having interactions/interfaces be within a single layer.

In the above example, the connectivity of the optical quantum circuit 100 can be improved by enabling coupling/transitioning of optical signals between waveguides in different layers without interaction/interfacing e.g. the optical signal of a waveguide in one layer can be transferred or coupled to a waveguide in another layer. In this example, as above, waveguides may be configured to interface within a one layer or a single layer such as first layer 1 and also between layers e.g. between first layer 1 and second layer 2. As above, in the at least first some of the plurality of interaction stages 110, 120, 130, each of the at least first some waveguides in the first plurality of waveguides can be configured to interface with a neighbouring waveguide from the first plurality of waveguides 10 with this interfacing occurring in the first layer 1. The optical signals from the second plurality of waveguides 20 can then be coupled from waveguides in the second layer 2 to a third at least some waveguides in the first layer 1 using an inter-layer coupler. In some examples the optical signals in the first plurality of waveguides 10 may also be coupled from the first plurality of waveguides 10 in the first layer 1 to a fourth at least some waveguides in the second layer 2 to provide suitable space on the first layer 1. However, in other examples, there may be suitable space without this being necessary. Once the optical signals from the second plurality of waveguides 20 have been coupled into the third at least some waveguides in the first layer 1, then in the second at least some of the plurality of interaction stages 110, 120, 130 each of at least some of the third at least some waveguides in the first layer 1 can interface with a neighbouring waveguide from the third at least some waveguides in the first layer 1 with this interfacing occurring within level 1. In some examples, to implement the third at least some interaction stages 110, 120, 130 the optical signals from the third at least some waveguides can be coupled or transferred back to the second plurality of waveguides 20 and, where appropriate, the optical signals from the fourth at least some waveguides can be coupled or transferred back to the first plurality of waveguides 10 with this coupling or transferring occurring between layers. The inter-layer interactions from the third at least some interaction stages 110, 120, 130 can then be implemented. In other examples, the third at least some interaction stages 110, 120, 130 can be implemented without coupling the optical signals back to their original layers since the interfacing in the third at least some interaction stages 110, 120, 130 is between layers and the optical signals from the waveguides have all switched layers. While this example is described wherein the first interaction stages occur, then the second interaction stages and then the third interaction stages, the skilled person would understand that the interaction stages could occur in any suitable or desired order providing that when waveguides from the second layer 2 are required to interface with each other, the signal from these waveguides are first coupled to waveguides in the first layer 1. As defined above, the signal from these waveguides may or may not then be coupled back to the second layer 2 after they have interfaced in the first layer 1.

In the example discussed above, the waveguides are arranged over two layers. However, an optical quantum circuit can be produced where the waveguide are distributed over more than two layers. In particular, in some examples, there can be one or more further pluralities of waveguides wherein each of the one or more further pluralities of waveguide are formed on a further layer of the substrate with each plurality of waveguides being formed on a separate layer of the substrate. Hence, instead of the waveguides of the optical circuit 100 being distributed over two layers, the waveguides can be distributed over multiple layers. Each waveguide in the further pluralities of waveguides couples an input port to an output port. Hence, there are the same number of input ports, output ports and waveguides. As with the above example, the waveguides of the one or more further pluralities of waveguides are configured to interface in a pairwise fashion at each of a plurality of interaction stages. In each interaction stage a waveguide can interface with (a) a neighbouring waveguide in the same layer; (b) an adjacent waveguide in a neighbouring layer; or (c) no other waveguides. A neighbouring layer is the layer directly above or below the layer under consideration. As above, an adjacent waveguide in a neighbouring layer is a waveguide that is above/below or closest to the waveguide under consideration in the neighbouring layer.

For each layer, in a at least first some of the interaction stages a at least first some of the waveguides in that layer interface with a neighbouring waveguide within the same layer. This ensures inlayer interactions/interfaces can be formed in the optical quantum circuit 100. In addition, in at least second some of the interaction stages, a at least second some of the waveguides in a layer interface with an adjacent waveguide in a neighbouring layer. This provides interaction/interfacing between waveguides in different layers. As above, the at least first some interaction stages can be the same interaction stages for each layer or be different interaction stages. In addition, some of the at least first some interaction stages for each layer may be the same for each layer while some may be different. The at least second some interaction stages can be the same or different interaction stages to the at least first some interaction stage. In addition, some of the at least second some interaction stages may be the same interaction stages as the at least first some interaction stages and some of the at least second some interaction stages may be different to the at least first some interaction stages. The waveguides that interface at each interaction stage are chosen based on the design and use of the optical quantum circuit. In other examples, interactions between waveguides within a layer may only incur in a single layer but there can be interactions with waveguides in neighbouring layers over multiple different pairs of layers. In such examples, if interactions are needed between waveguides in a layer other than the layer for which inlayer interactions occur then the optical signals of waveguides in the layer requiring interactions can be coupled to the layer in which inlayer interactions occur. The layer in which inlayer interactions occur may be a top layer. This can make it easier to form the optical quantum circuit 100.

The above examples provided an optical quantum circuit 100 with increased connectivity. In particular by enabling pairwise interactions between waveguides in differing layers more versatile connections between waveguides can be created. As will be explained in more detail later, this enables improved interferometers to be produced. In addition, this allows greater versatility when the optical quantum circuit 100 is being used for the gate-based model of optical quantum computing as it increases the flexibility as to which qubits can be entangled. For example, a first layer could be used to implement a quantum circuit with individual qubits travelling in individual waveguides while a second layer could be used to transport qubits between waveguides to lessen the impact of a limitation that only qubits in nearest neighbour waveguides can be coupled/entangled. Further layers could be added to increase the size of the gated-based quantum circuit and/or to increase transport capabilities of qubits between waveguides. The increased optical connectivity that comes from enabling waveguides to interface in a pairwise fashion between layers thus enables more flexible and versatile optical quantum circuits to be created.

As discussed above, the waveguides in the first plurality of waveguides 10, the second plurality of waveguides 20 and any further plurality of waveguides can be configured to interface with each other in a pairwise fashion a variety of different manners. In some examples, the waveguides can be configured to interface with each other via variable beam splitters which can each be formed from a Mach-Zehnder interferometer. Thus, the at least first some of the waveguides of the first plurality of waveguides 10 interface with a neighbouring waveguide via a variable beam splitter, the at least first some of the waveguides of the second plurality of waveguides 20 interface with a neighbouring waveguide via a variable beam splitter, and the at least second some of the waveguides of the first plurality of waveguides 10 interface with an adjacent waveguide of the second plurality of waveguides 20 via a variable beam splitter. Where present, waveguides in the one or more further pluralities of waveguides also interface with other waveguides in the same or a different layer via a variable beam splitter. Having the waveguides interface via a variable beam splitter provides a useful way to interface waveguides. Optical quantum circuits where waveguides interface via variable beam splitters can be used to form an interferometer or can be used as a routing component in a gate-based optical quantum computer. Other uses of such optical quantum circuits include all-to-all routing and neural networks as well as other N-mode processes.

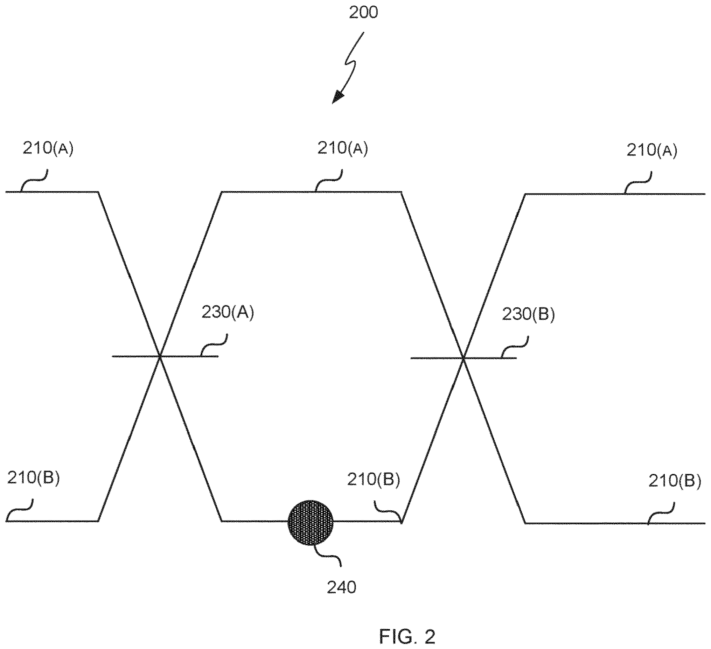

Figure 2 shows a variable beam splitter 200 formed as a Mach Zehnder interferometer. The variable beam splitter 200 is being used as an interface between waveguides 210(a) and 210(b). The variable beam splitter 200 comprises a first 50/50 directional coupler 230a that couples the two waveguides 210(a) and 210(b) which are interfacing at the variable beam splitter 200. The 50/50 directional coupler may comprise a 50/50 beam splitter. The variable beam splitter 200 further comprises a second 50/50 directional coupler 230(b) wherein the second 50/50 directional coupler 230(b) also couples the two waveguides 210(a) and 210(b). The second 50/50 directional coupler 230(b) may be a 50/50 beam splitter. The first 50/50 directional coupler 230(a) and the second directional coupler 230(b) are spaced apart from each other. The variable beam splitter 200 further comprises a phase shifter 240 in either waveguide 210(a) or waveguide 21 0(b). In some examples, a phase shifter 240 is only present in one of waveguide 210(a) or waveguide 210(b). However, in other examples, a phase shifter 240 can be present in both waveguide 210(a) and waveguide 210(b). In addition, while in some examples phase shifter 240 is a single phase shifter, in other examples phase shifter 240 can be formed of several phase shifters. The variable beam splitter 200 shown in Figure 2 provides an exemplary way of forming a variable beam splitter which enable the advantages of optical quantum circuits using variable beam splitters to be obtained.

While the above has considered having waveguides interface using variable beam splitters, the skilled person would understand there are other ways for waveguides to interface in a pairwise fashion. For example, the waveguides could interface via beam splitters and phase shifters separately. In addition, waveguides can crossover each other without having them interact. However, these crossovers consume space and can lead to imperfections as well as potentially having long optical path lengths. Using a multilayer structure can overcome some of the problems associated with having waveguides crossover.

As discussed above, waveguides can be configured to interface with each other in a pairwise fashion. For example, the waveguides can be configured to interface via a variable beam splitter or via a 50/50 beam splitter or any other suitable means. To this end, the waveguides need to be configured such that light modes travelling in one waveguide interact or overlap with light modes travelling in another waveguide thus causing light to couple between the waveguides, for example at a 50/50 directional coupler. In one example, in order to enable two waveguides to interface and for light from a first waveguide to couple to light from a second waveguide, for example to form the 50/50 directional coupler, the two waveguides can be narrowed at the position or interaction stage at which they are to interface, this narrowing can be a horizonal or vertical narrowing. This will cause the optical mode to occupy a larger (transversal) spatial volume, allowing light modes in different waveguides to overlap. This results in light modes coupling between the two waveguides. In addition or as an alternative, in order to enable two waveguides to interface and for light modes from a first waveguide to couple to light modes from a second waveguide, the two waveguides can be brought towards each other at the point or interaction stage at which they are to interface. In other words, the gap between the two waveguides can be reduced. This again causes light travelling in the two waveguides to couple. When the two waveguides are on differing layers, then narrowing the gap between the two waveguides can comprise using vertical tapering during lithography to bring the two waveguides towards each other and hence narrow the gap between the two waveguides. Vertical tapering can also be used to narrow the waveguide in the vertical direction e.g. by decreasing the height of the waveguide. This will cause the optical mode to occupy a larger (transversal) spatial volume, allowing light modes in different waveguides to overlap. This is similar to the above narrowing of the waveguides, except the waveguides are narrowing vertically rather than the horizontally. When interfacing waveguides between layers by narrowing the waveguides, the waveguides can be narrowed vertically, horizontally or both.

In other examples, the first layer 1 and the second layer 2 can be joined using wafer-to-wafer bonding. In this example, first layer 1 and second layer 2 can each be formed on the top surface of separate or divided substrates. The two top surfaces can then be joined. The waveguides can be made to interface as described above or in any other suitable way. For example, the waveguides can be made to interface by narrowing the waveguide either horizontally or vertically. This will cause the optical mode in the waveguides to occupy a larger (transversal) spatial volume, allowing light modes in different waveguides to overlap. In addition, or as an alternative the waveguides can be made to interface by narrowing a gap between the waveguides that will interface either by aligning them horizontally and/or by decreasing a vertical distance between the waveguides, using for example vertical tapering. The skilled person would understand that other methods of coupling two waveguides can be used as appropriate.

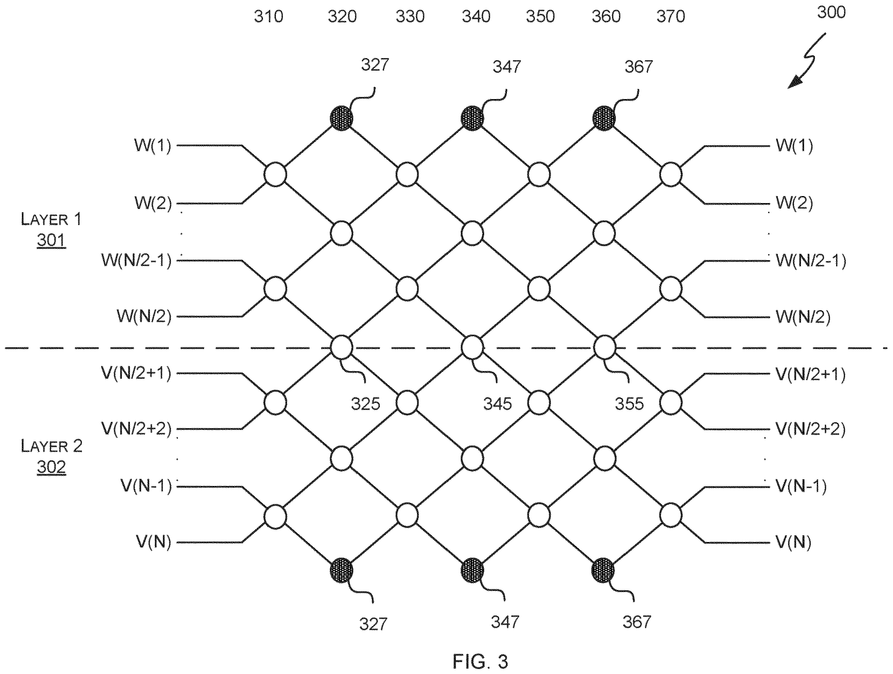

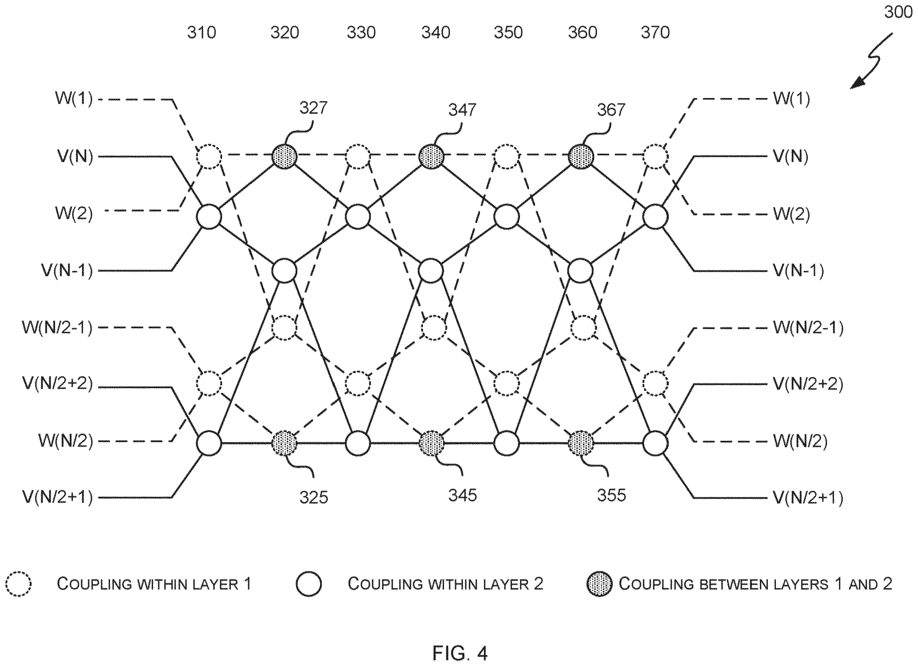

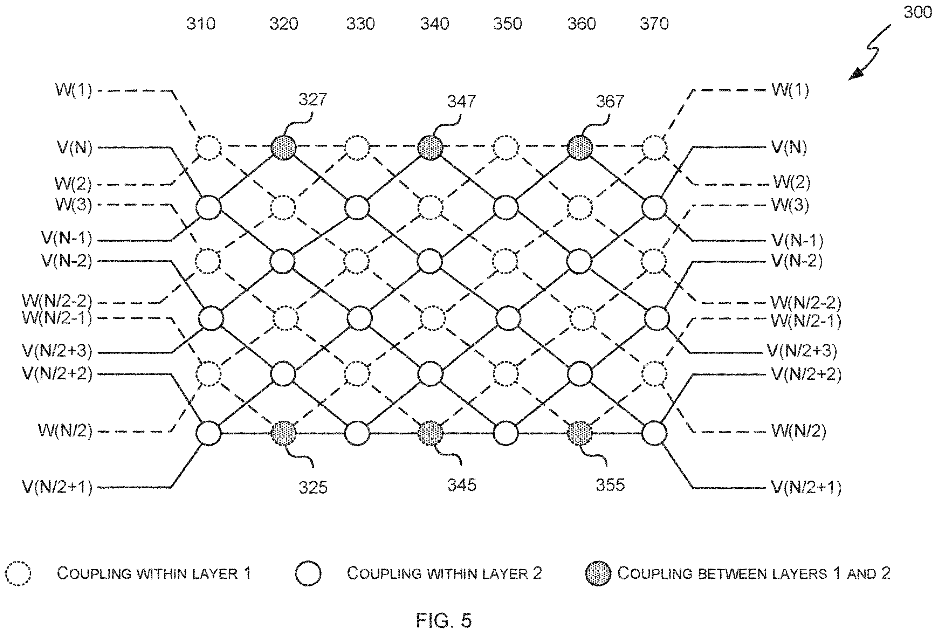

Figures 3, 4 and 5 show an example of a particular form of optical quantum circuit 300, 400 that can be formed across two layers. The numbering is the same across both Figures and like reference numerals represent the same element. In Figure 3 the two layers 301 and 302 are pictured adjacent to each other to enable an easier view of how the waveguides interface across layers. In Figures 4 and 5 the two layers 301 and 302 are pictured intertwined. In practice, the two layers 301 and 302 would be positioned in a stacked fashion with one layer above the other layer. This enables waveguides in the first layer to interface with waveguides in the second layer via vertical waveguide couplings between layers.

In the example shown in Figures 3, 4 and 5, the optical quantum circuit comprises a multiport interferometer. Multiport interferometers have N waveguides that connect N optical input ports and N optical output ports. Optical modes travelling in the N waveguides interface through variable beam splitters such as Mach Zehnder interferometers. Such interferometers can be used for many applications including photonic quantum computing, light switching, optical neural nets etc. Known multiport interferometers have either a triangular design or a rectangular design. However, both designs had limited connectivity between the first input port and the last output port making them sensitive to errors in the variable beam splitter when light has to travel from the first input port to the last output port. In addition, if manufacturing errors mean a variable beam splitter does not have full variability, so not all settings can be achieved, this means light cannot always be transmitted from the first input port to the last output port. Hence, the connectivity of the multiport interferometer can be reduced further and, for example, there may be no path between the first input port and the last outport port. The sensitivity to errors and potential for missing connections limits the functioning of such multiport interferometers. The multiport interferometers shown in Figures 3, 4 and 5 uses the idea of multi-layer optical quantum circuits to overcome these difficulties.

As shown in Figures 3, 4 and 5, a first plurality of waveguides W are formed on the first layer 301 and a second plurality of waveguides V are formed on the second layer. Each waveguide W, V couples an input port to an output port and the waveguides interface in a pairwise fashion either within a layer or between layers at interaction stages 310, 320, 330, 340, 350, 360 and 370. The first plurality of waveguides are numbered from 1 to N/2 while the second plurality of waveguides are numbered from N/2+1 to N. Hence, each plurality of waveguides comprises N/2 waveguides numbered consecutively. The interaction stages 310, 320, 330, 340, 350, 360 and 370 are split into two sets comprising a first set which in Figure 3 includes interaction stages 310, 330, 350, and 370 and a second set which in Figure 3 includes interaction stages 320, 340 and 360.

In the first set of interaction stages, the waveguides interface in a pairwise fashion such that a waveguide numbered 2j+1 interfaces with a waveguide numbered 2j+2 where j runs from 0 to $\frac{N}{2} - 1$. Given the distribution of waveguides, in the first set of interaction stages, all waveguides are interfacing with another waveguide within the same layer so that waveguides in the first layer 301 are interfacing with each other in a pairwise fashion and waveguides in the second layer are interfacing with each other in a pairwise fashion. In the second set of interaction stages 320, 340, 360 waveguides numbered 2j interface with waveguides numbered 2j+1 modulo N for j from 1 to $\frac{N}{2}$. This means that the waveguide numbered $\frac{N}{2}$ on the first layer 301 interfaces with the waveguide numbered $\frac{N}{2} + 1$ on the second layer 302 and the waveguide numbered N on the second layer 302 interfaces with the waveguide numbered 1 on the first layer 301. As such, in the second set of interaction stages, as well as some waveguides (e.g. waveguides numbered 2 to $\frac{N}{1} - 1$ and waveguides $\frac{N}{2}+2$ to N-1) interface within a layer in a pairwise fashion, the waveguides at the edge of each layer interface with a waveguide from the other layer in a pairwise fashion. While the terms first and second set of interaction stages have been used, these terms are merely used to distinguish the two sets of interaction stages and do not confer any temporal ordering. In some examples, the first and second set of interaction stages can be interleaved and the initial interaction stage can be either a first or a second interaction stage. Thus, as explained in more detail below, when the interaction stages are numbered, interaction stage one can be a first interaction stage or a second interaction stage.

The skilled person would understand that the splitting of the interaction stages into the first and second set of interaction stages defines in more detail how waveguides interact in the at least first some interaction stages, the at least second some interaction stages and the at least third some interaction stages. In particular, the splitting of the interaction stages into the first and second set defines at each interaction stage which waveguides are interfacing within a layer and which waveguides are interfacing between layers. While the at least third some of the interaction stages can be considered to be the second set of interaction stages, waveguides interface within a layer in the first and second set of interaction stages. Hence, the at least first some interaction stages and at least second some interaction stages can be considered to be the first and second set of interaction stages for waveguides 2 to $\frac{N}{1} - 1$ and waveguides $\frac{N}{2}+2$ to N-1 and the first set of interaction stages for waveguides 1, $\frac{N}{2}, \frac{N}{2} + 1$ and N.

In Figure 3 the interfacing of waveguide $\frac{N}{2}$ with waveguide numbered $\frac{N}{2} + 1$ is shown by circles 325, 245, 355 which represent an interface at an interaction stage. While these are depicted for ease of viewing as being within the horizontal plane, the skilled person would understand that as shown in Figure 4 these interfaces are between vertical layers. In Figure 3, waveguide 1 and N interface at circles 327, 347, 367. While these circles are depicted twice at opposite edges of multiport interferometer 300, the skilled person would understand these circles represent an interface between layers. This is also depicted in Figures 4 and 5 where the layers 301 and 302 are shown overlapping.

Having waveguides interface between layers as described above results in what can be called a cylindrical multiport interferometer. In such an interferometer, additional connections are introduced between the first waveguide and the last (e.g. Nth) waveguide. These additional connections significantly increase the optical connectivity of the multiport interferometer by adding additional paths to the multiport interferometer. This reduces the sensitivity of the multiport interferometer to errors and thus, when the multiport interferometer is being used for quantum computing, enables implementation of a greater subset of the N-by-N unitary matrices that may be implemented on the multiport interferometer. In addition, when the multiport interferometer is being used for switching this leads to more versatile switching that improves connections between waveguides that would otherwise be distance. Furthermore, having a better connected optical quantum circuit or multiport interferometer leads to a more even distribution of the reflectivities, meaning that the space of all unitary matrices is more evenly distributed over the space of phase shifter reflectivities. In prior multiport interferometers, most unitary matrices require very low reflectivities in the variable beam splitters, but this can be less the case for optical circuits with greater connectivity. This can lead to better error mitigation properties. In particular, this can decrease the sensitivity of setting error (the error in the optical transformation implemented by the multiport interferometer) with respect to phase shifter error. In addition, low reflectivities can be hard to implement in optical elements with realistic fabrication errors. Therefore, having a better connected optical circuit which can implement optical transformations while not requiring very low reflectivities can allow a user to implement a greater variety of unitary transformations and thus perform a greater variety of quantum computations with smaller errors.

Using a layered structure can also reduce optical path length. Reduced optical path length leads to reduced photon loss as a result of attenuation, which can be a source of error in optical quantum circuits e.g. when they are used for optical quantum computing. Using a layered structure can therefore decrease the errors in optical quantum computing. Using a layered structure can also reduce the optical depth (number of optical elements such as beam splitters that have to be traversed by light to go from inputs to outputs) of an optical quantum circuit or multiport interferometer. This is because using a layered structure allows all waveguides to interface at each interaction stage, rather than having the waveguides at the edges of a single-layer optical circuit not engaging in optical interfacing, as is the case in prior multiport interferometer schemes. Having lower optical depth reduces the number of errors that are introduced by imperfections in the optical elements (such as beam splitters). Furthermore, building a multi-layered optical circuit can allow a user to perform the same optical transformations on an optical circuit of smaller surface area. When building larger optical circuits, which can be useful for performing quantum computations on an optical quantum circuit or multiport interferometer, the optical quantum circuit or multiport interferometer may occupy a large surface area. There is a limitation to the surface area that an optical quantum circuit can occupy imposed by limitations to fabrication techniques. Building a multi-layered circuit can decrease the surface area occupied and therefore allow a user to construct an optical circuit which can perform an optical transformation on a larger number of optical modes than is possible in a single-layer

As most clearly shown in Figures 4 and 5, in an example the waveguide numbered N is formed on the second layer 302 adjacent the waveguide numbered 1 on the first layer 301. Hence, waveguides 1 and N are neighbouring waveguides by virtue of their "vertical" connection between layers. This enables a short optical path between waveguides 1 and N reducing any loss in the optical path. Similarly, in the example, the waveguide numbered $\frac{N}{2} + 1$ in the second layer 302 is formed adjacent the waveguide numbered $\frac{N}{2}$ in the first layer 301. Hence, waveguides $\frac{N}{2} + 1$ and $\frac{N}{2}$ are neighbouring waveguides by virtue of their "vertical" connection between layers. This enables a short optical path between waveguides $\frac{N}{2}$ and $\frac{N}{2} + 1$ reducing any loss in the optical path. In some examples, this can be generalised such that waveguides numbered N-k+1 in the second layer 302 are formed adjacent waveguides numbered k in the first layer 301 for k from 1 to $\frac{N}{2}$. This can simplify forming the waveguides and ensure the alignment between waveguide 1 and N and waveguides $\frac{N}{2}$ and $\frac{N}{2} + 1$. The skilled person would understand that in this example, in Figure 5, waveguide V(N-1) can be arranged above or adjacent waveguide W(2) and waveguide V(N-2) above or adjacent waveguide W(3) but the pairs of waveguides are shown offset for convenience of view. Similarly, waveguide V(N/2+2) can be arranged above or adjacent waveguide W(N/2-1) and waveguide V(N/2+3) can be above over adjacent waveguide W(N/2-2) but the pairs of waveguides are shown offset for convenience of view.

While the above example has considered waveguides that are equally split between layers, the skilled person would understand that this is not essential and in other examples there may be an unequal number of waveguides in each layer. In this case the interfacing between waveguide 1 and N will be a between layer interface and the other between layer interface will be between the last waveguide on the first layer and the first waveguide on the second layer. In this example, for waveguide 1 and N, the at least third some interaction stages will comprise the second set of interaction stages. Whether the at least third some interaction stages for the last waveguide in the first layer interfacing with the first waveguide in the second layer comprises the first or second set of interaction stages will depend upon the numbering of the last waveguide in the first layer and the first waveguide in the second layer. For all mid-layer waveguides the waveguides will interface within a layer for both the first and second set of interaction stages so both the first and second set of interaction stages can be considered to comprise the at least first some and the at least second some interaction stages.

The above example considers a cylindrical interferometer formed over two layers. However, a cylindrical interferometer could also be formed over any plurality of layers provided the waveguides have a connectivity wherein in a first set of interaction stages waveguides numbered 2j+1 interface with waveguides numbered 2j+2 for j from 0 to $\frac{N}{2}-1$ and in a second set of interaction stages waveguides numbered 2j interface with waveguides numbered 2j+1 modulo N for j from 1 to $\frac{N}{2}$. This ensures the cylindrical connectivity required to achieve the advantageous effects of the cylindrical interferometer.

As shown in Figures 3, 4 and 5, in the cylindrical interferometer the first set of interaction stages differ from the second set of interaction stages. The interaction stages can be numbered from 1 to p and the first set of interaction stages and second set of interaction stages can be interleaved. In other words, the first set of interaction stages can comprise even numbered interaction stages and the second set of interaction stages can comprise odd numbered interaction stages. Alternatively, the first set of interaction stages can comprise odd numbered interaction stages and the second set of interaction stages can comprise even numbered interaction stages. This provides further structure to the cylindrical multiport interferometer.

In some examples, the optical quantum circuit can comprise phase shifters that act as additional optical elements of the optical quantum circuit. For example, a phase shifter could be formed in any waveguide of the first or second plurality of waveguides. In addition, a single waveguide from the first or second plurality of waveguides may have multiple phase shifters formed within it. These phase shifters increase the versatility of the optical quantum circuit. For example, when the optical quantum circuit is used for gate-based quantum computing, these phase shifters could implement single qubit gates. In addition, when the optical quantum circuit is used as a multiport interferometer these phase shifters can be used to increase the versatility of the multiport interferometer. When further pluralities of waveguides are present, any of these waveguides could also comprise a phase shifter as required.

While the above examples have focused on a cylindrical interferometer with waveguides interfacing using in-layer interfaces/interactions on two different layers, in other examples, the waveguides 1 to N-1 can be formed on a first layer 1, which can be a top layer. The waveguide N can then be formed on a second layer 2, which can be a bottom layer. Alternatively, the waveguides 2 to N can be formed on a first layer 1, which can be a top layer, and the waveguide 1 can be formed on a second layer 2, which can be a bottom layer. The waveguide (e.g. waveguide 1 or N) on the second layer 2, can be configured to interface with the appropriate waveguides (e.g. 2 and N or 1 and N-1) from the first layer 1 at the appropriate set of interaction stages as discussed above in relation to the cylindrical interferometer. This interfacing can be done by using between layer or inter-layer interactions/interfaces. The waveguides on the first layer 1 can also be configured to interface with each other within the layer as defined above with respect to the cylindrical interferometer using in layer interfacing/interactions. In some examples, the path lengths of all waveguides in the first layer 1 are increased to correspond to the equivalent path length for the waveguide (1 or N) in the second layer 2 to ensure all optical signals are in waveguides for a similar length of time. In other examples other ways to delay optical signals may be used e.g. optical delay lines.

In another example, the waveguides 1 to N can be formed on a first layer 1. For the second set of interaction stages, the optical signal in either waveguide 1 or waveguide N can be coupled to a waveguide in the second layer 2. This waveguide in the second layer 2 can then be configured to interface with either the waveguide N from the first layer 1 (if the optical signal from waveguide 1 was coupled to the waveguide in the second layer 2) or the waveguide 1 from the first layer 1 (if the optical signal from the waveguide N was coupled to the waveguide in the second layer 2). In some examples, the path lengths of all waveguides in the first layer 1 are increased to correspond to the equivalent path length for the waveguide in the second layer 2 to ensure all optical signals are in waveguides for a similar length of time. In other examples other ways to delay optical signals may be used e.g. optical delay lines. After the interactions in the second set of interactions stages, the optical signal in the waveguide from the second layer 2 can be coupled back to the waveguide from the first layer 1 from which it originated e.g. waveguide 1 or waveguide N. This enables an equivalent to the cylindrical interferometer to be built while only using interactions in a single layer and between layers

The skilled person would understand that the optical quantum circuit can be formed on different suitable substrates and the waveguides can comprise multiple suitable different forms of waveguide. All suitable substrate materials can be used but some example suitable substrate materials comprise lithium niobate and aluminium oxide. In addition, the waveguides can comprise silicon nitride based waveguides, indium-phosphide based waveguides and silicon based waveguides. However, the skilled person would understand that any suitable substrate and any suitable waveguide can be used depending upon the function of the optical quantum circuit.

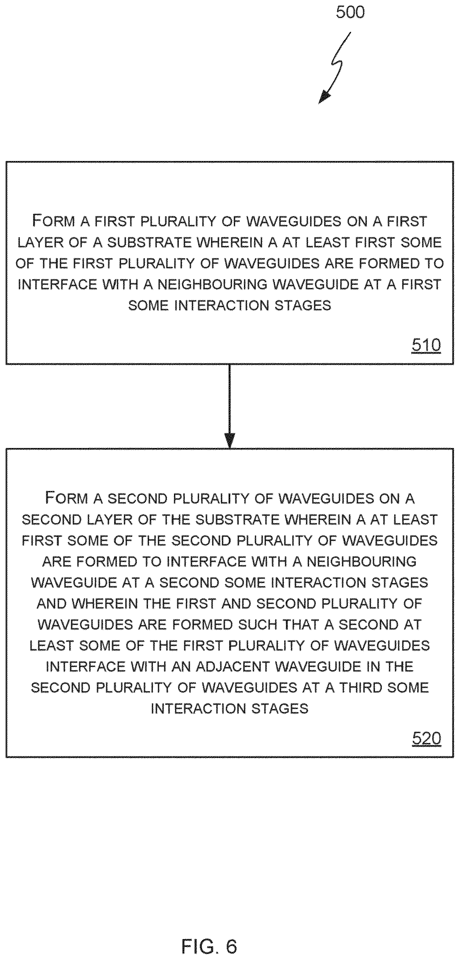

Figure 6 illustrates an example method 500 of forming an optical quantum circuit such as optical quantum circuit 100, 300 in accordance with the present application.

The method begins at step 510 and comprises forming a first plurality of waveguides on a first layer of a substrate using lithography. The waveguides are formed using any suitable lithographic process such as deep-UV lithography, e-beam lithography and contract lithography. As discussed above, the substrate can be any suitable substrate, such as lithium niobate or aluminium oxide. The waveguides can be formed of any suitable material such as silicon nitride, indium-phosphide and silicon. Each waveguide of the first plurality of waveguides connects an input port to an output port. The input ports comprise any suitable input where light can enter the waveguide. The output port comprises any suitable output where light can exit the waveguide. A plurality of interaction stages exist between the input ports and output ports wherein the plurality of interaction stages represent points where waveguides may be formed to interface. Forming the first plurality of waveguides comprises forming a at least first some of the first plurality of waveguides to interface with a neighbouring waveguide at each of at least first some of the interaction stages. This can be achieved by narrowing the waveguides configured to interface at a particular interaction stage at that interaction stage. This can also be achieved by narrowing a gap between two waveguides configured to interface at a particular interaction stage at that interaction stage. Both the narrowing of the waveguides and the narrowing of the gap between waveguides can be performed using standard lithographic techniques and/or etching processes. In the case of narrowing waveguides in the vertical direction, this can be done using vertical tapering. The waveguides that should interface at each interaction stage can be determined based on the function of the optical circuit and varies between optical quantum circuits.

At step 520, the method comprises forming a second plurality of waveguides on a second layer of a substrate using lithography. The second layer of the substrate is a layer of the substrate either directly above or directly below the first layer of the substrate. As with the first plurality of waveguides, the second plurality of waveguides can be formed using any suitable lithographic process such as deep-UV lithography, e-beam-lithography and contact lithography. In some examples, to ensure consistency in the optical quantum circuit, the second plurality of waveguides are formed of the same material as the first plurality of waveguides. Each of the second plurality of waveguides connects and input port to an output port. As with the first plurality of waveguides, the input ports and the output ports can take any suitable form and the skilled person would understand they represent the two ends of the waveguides. The plurality of interaction stages are positioned between the input ports and output ports and are broadly aligned with the arrangement of the interaction stages for the first plurality of waveguides. An interaction stage is a point at where two waveguides may be configured to interface. In some examples, such as when the optical quantum circuit is an interferometer, multiple pairs of waveguides may interface at each interaction stage. A at least first some of the second plurality of waveguides are configured to interface with a neighbouring waveguide of the second plurality of waveguides at each of a at least second some interaction stages. As defined above the at least first some interaction stages may be the same or different interaction stages to the at least first some interaction stages. In addition, there may be partial but not complete overlap between the at least first some interaction stages and the at least second some interaction stages. Forming a waveguide to interface with a neighbouring waveguide at an interaction stage can comprise narrowing that waveguide and/or the neighbouring waveguide at the interaction stage. In addition, forming a waveguide to interface with a neighbouring waveguide at an interaction stage can comprise narrowing the gap between the waveguide and the neighbouring waveguide at the interaction stage. This can be done using standard lithographic techniques. The waveguides that should interface at each interaction stage can be determined based on the function of the optical circuit and varies between optical circuits. As discussed above, in other examples the second plurality of waveguides may not interface with each other. Thus, in some examples the second at least some interaction stages may not be formed in the second plurality of waveguides.

The first and second plurality of waveguides are also formed to enable between layer pairwise interfaces of waveguides at some of the interaction stages. In particular, the waveguides are formed such that at a at least third some of the interaction stages a at least second some of the first plurality of waveguides interface with an adjacent waveguide in the second plurality of waveguides. Hence, a at least second some of the waveguides on the first layer interface with waveguides in the second layer. A at least second some of the first plurality of waveguides being formed to interface with a waveguide in the second plurality of waveguides can also involve a corresponding a at least second some of the second plurality of waveguides being formed to interface with a waveguide in the first plurality of waveguides. The at least third some interaction stages can be the same or different interaction stages to the at least first some interaction stages and the at least second some interaction stages. In addition, there can be partial but not complete overlap between the at third some interaction stages and one or more of the at least first some interaction stages and the at least second some interaction stages.

Forming a waveguide from the first plurality or waveguides to interface with a waveguide from the second plurality of waveguides (e.g. between layers) can comprise narrowing both waveguides at the interaction stage where the two waveguides are to interface. In addition or as an alternative, forming a waveguide from the first plurality of waveguides to interface with a waveguide from the second plurality of waveguides can comprise narrowing a gap between the waveguides at the interaction stage where they are configured to interface using vertical tapering. In other examples, the first plurality of waveguides may be formed on a first substrate and the second plurality of waveguides may be formed on a second substrate. The two substrates may then be joined using wafer-to-wafer bonding with a surface of the first substrate in which the first plurality of waveguides are formed being joined to a surface of the second substrate in which the second plurality of waveguides are formed. The first and second plurality of waveguides can be formed to interface, as described above, by either reducing a width of the waveguides at the interface point and/or narrowing a gap between the waveguides either by aligning them horizontally and/or by having them nearer the surface of their respective substrate.

While the above example has described forming an optical circuit over two layers with waveguides in a first layer interfacing in a pairwise fashion with waveguides in a second layer, the skilled person would understand that the optical quantum circuit can be formed over more than two layers with waveguides interfacing between neighbouring layers wherein neighbouring layers are layers either directly above or directly below each other. Hence, the above method can further comprise forming, using lithography, one or more further pluralities of waveguides on each of one or more further respective layers of the substrate. As above, any suitable lithographic process can be used such as deep-UV lithograph, e-beam lithography and contact lithography. Each waveguide of the one or more further pluralities of waveguides connects an input port to an output port. In addition, a at least first respective some of each plurality of waveguides are formed to interface with a neighbouring waveguide of the same/respective plurality of waveguides in a at least first respective some interaction stages. The at least first respective some interaction stages can be the same or different interaction stages for each plurality of waveguides. In addition, there can be partial but not complete overlap between each at least first respective some interaction stages for each plurality of waveguides. The each at least first respective some interaction stages can overlap with the at least first, second or third some interaction stages. As above, waveguides can be formed to interface with a neighbouring waveguide by either narrowing both waveguides at the interaction stage where they interface and/or narrowing a gap between the waveguides at the interaction stage where they interface. In other examples intra-layer interactions/interfacing may only occur in a single layer and intra-layer interaction stages may only be formed for this layer.

The at least one or more further pluralities of waveguides are formed such that each of at a least second respective some of each plurality of waveguides on a respective layer interface with an adjacent waveguide of a plurality of waveguides formed on a neighbouring layer to the respective layer in a at least second respective some interaction stages. Hence, when multiple layers are used the waveguides in one layer interface with waveguides in a neighbouring layer. In some examples, waveguides can interface between all layers. In other examples, waveguides may only interface between layers pairwise in the layers or in some other limited way. The interaction stages at which waveguides interface between layers can be the same interaction stages at which waveguides interface within a layer (provided each waveguide interfaces in a pairwise fashion so only within or between layers at any one interaction stage) or different interaction stages. Alternatively there can be partial but not complete overlap in the interaction stages where waveguides interface within a layer and interaction stages where waveguide interface between a layer. As above, waveguides can be formed to interface with an adjacent waveguide on a neighbouring layer by either narrowing both waveguides at the interaction stage where they interface and/or narrowing a gap between the waveguides at the interaction stage where they interface using vertical tapering.

In summary, in some examples the application relates to an optical quantum circuit formed over multiple layers wherein waveguides that form the optical quantum circuit interface both between layers and within a layer in a pairwise fashion. This enables a more versatile optical quantum circuit to be formed. In one example, the optical quantum circuit comprises a multiport interferometer formed over at least two layers that has a cylindrical design so the edge waveguides interface with each other at every other interaction stage. This provides a more connected interferometer which reduces the optical path between the first and last waveguide of the interferometer and thus reduces losses between the first and last waveguide enabling a wider range of unitaries to be implemented when the interferometer is used as an optical quantum computer and more flexible switching when the interferometer is used for optical switching.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

## Claims

1.  An optical quantum circuit comprising:

    a substrate;
    a first plurality of waveguides formed on a first layer of the substrate wherein the first plurality of waveguides connect a first plurality of input ports to a first plurality of output ports; and
    a second plurality of waveguides formed on a second layer of the substrate wherein the second plurality of waveguides connect a second plurality of input ports to a second plurality of output ports; and wherein:
    at least some of the waveguides in the first plurality of waveguides are formed to interface, in a pairwise fashion, with another waveguide from the first or second plurality of waveguides in each of a plurality of interaction stages arranged between the first and second plurality of input ports and the first and second plurality of output ports, such that:

    in a at least first some interaction stages of the plurality of interaction stages each of a at least first some waveguides of the first plurality of waveguides interface with a respective neighbouring waveguide of the first plurality of waveguides, wherein each of the at least first some waveguides of the first plurality of waveguides is within the layer of the respective neighbouring waveguide of the first plurality of waveguides; and
    in a at least second some interaction stages of the plurality of interaction stages each of a at least second some waveguides of the first plurality of waveguides interface with a respective adjacent waveguide of the second plurality of waveguides, wherein the respective adjacent waveguide of the second plurality of waveguides is formed on the second layer to be a neighbouring waveguide to the corresponding waveguide from the at least second some waveguides of the first plurality of waveguides on the first layer.

2.  The optical quantum circuit of claim 1, wherein at least some of the waveguides in the second plurality of waveguides are formed to interface, in a pairwise fashion, with another waveguide from the second plurality of waveguides in each of a plurality of interaction stages arranged between the second plurality of input ports and the second plurality of output ports such that:
    in a at least third some interaction stages of the plurality of interaction stages each of a at least first some waveguides of the second plurality of waveguides interface with a respective neighbouring waveguide of the second plurality of waveguides, wherein each of the at least first some waveguides of the second plurality of waveguides is within the layer of the respective neighbouring waveguide of the second plurality of waveguides.

3.  The optical quantum circuit of claim 2, further comprising:
    one or more further pluralities of waveguides wherein each of the one or more further pluralities of waveguides are formed on a separate respective layer of the substrate and each of the one or more further pluralities of waveguides connect a plurality of input ports for that plurality of waveguides to a plurality of output ports for that plurality of waveguides; and wherein:
    at least some of each of the one or more further plurality of waveguides are configured to interface, in a pairwise fashion, with another waveguide from either (a) the respective one or more further plurality of waveguide on the respective layer or (b) the plurality of waveguides formed on a neighbouring layer to the respective layer in each of a plurality of interaction stages arranged between the plurality of input ports and the plurality of output ports, such that:

    in a first respective at least some interaction stages of the plurality of interaction stages each of a at least first some waveguides in the respective plurality of waveguides on the respective layer interface with a neighbouring waveguide from the respective plurality of waveguides on the respective layer; and
    in a second respective at least some interaction stages of the plurality of interaction stages each of a at least second some waveguides in the respective plurality of waveguides interface with an adjacent waveguide of the plurality of waveguides formed on the neighbouring layer to the respective layer.

4.  The optical quantum circuit of claim 2 or claim 3 wherein:
    at least some of the at least first some interaction stages are the same interaction stages as at least some of the at least third some interaction stages.

5. The optical quantum circuit of any previous claim, wherein:
the first plurality of waveguides and the second plurality of waveguides interface with each other in the pairwise fashion via beam splitters, such that:

> the at least first some waveguides of the first plurality of waveguides interface with the neighbouring waveguide of the first plurality of waveguides via a beam splitter; and
> the at least second some waveguides of the first plurality of waveguides interface with the adjacent waveguide of the second plurality of waveguides via a beam splitter.

6. The optical quantum circuit of claim 5, wherein each beam splitter comprises a 50/50 beam splitter.

7. The optical quantum circuit of claim 5, wherein each beam splitter comprises a variable beam splitter, and wherein each variable beam splitter comprises:

> a first 50/50 directional coupler that couples each of a first and a second waveguide configured to interface at the variable beam splitter;
> a second 50/50 directional coupler that couples each of the first and the second waveguide configured to interface at the variable beam splitter; and
> a phase shifter formed in at least one of the first or the second waveguide configured to interface at the variable beam splitter, wherein the phase shifter is between the first 50/50 directional coupler and the second 50/50 directional coupler.

8. The optical quantum circuit of any of claims 2 to 7, wherein:

> the optical quantum circuit comprises a multiport interferometer;
> the waveguides in the first and second plurality of waveguides are numbered consecutively from 1 to N where N is a positive integer;
> at each of a first set of interaction stages, the waveguide numbered 2j+1 interfaces with a waveguide numbered 2j+2 for $j = 0,1 \ldots \frac{N}{2} - 1$; and
> at each of a second set of interaction stages different from the first set of interaction stages, the waveguide numbered 2j interfaces with a waveguide numbered 2j+1 modulo N for
> $$j = 1,2 \ldots \frac{N}{2}.$$

9. The optical quantum circuit of claim 8, wherein:

> the first plurality of waveguides formed on the first layer are numbered from 1 to N/2 wherein N/2 is a positive integer;
> the second plurality of waveguides formed on the second layer are numbered from N/2+1 to N.

10. The optical quantum circuit of claim 8 or claim 9 wherein the waveguide numbered N is formed on the second layer adjacent to the waveguides numbered 1 on the first layer, and the waveguide numbered N/2+1 is formed on the second layer adjacent to the waveguides numbered N/2 on the first layer.

11. The optical quantum circuit of claim 9 wherein the waveguides numbered N-k+1 are formed on the second layer adjacent to the waveguides numbered k on the first layer for k = $1,2 \ldots \frac{N}{2}$.

12. The optical quantum circuit of claim 3, wherein:

> the optical quantum circuit comprises a multiport interferometer;
> the waveguides interface with each other in a pairwise fashion via variable beam splitters;
> the first, second and one or more further plurality of waveguides combined comprise N waveguides formed over the first, second and one or more separate respective layers;
> at each of a first set of interaction stages, the waveguide numbered 2j+1 interfaces with a waveguide numbered 2j+2 for $j = 0,1 \ldots \frac{N}{2} - 1$; and
> at each of a second set of interaction stages different from the first set of interaction stages, the waveguide numbered 2j interfaces with a waveguide numbered 2j+1 modulo N for
> $$j = 1,2 \ldots \frac{N}{2}.$$

13. The optical quantum circuit of any of claims 8 to claim 12 wherein:

> the plurality of interaction stages are numbered from 1 to p; and either
> the first set of interaction stages are odd numbered interaction stages, and the second set of interaction stages are even numbered interaction stages; or
> first set of interaction stages are even numbered interaction stages, and the second set of interaction stages are odd numbered interaction stages.

14. The optical quantum circuit of any previous claim, wherein configuring the first plurality of waveguides and the second plurality of waveguides to interface with each other comprises, at each interaction stage of the plurality of interaction stages:
    narrowing each waveguide configured to interface at that interaction stage.

15. The optical quantum circuit of any previous claim, wherein configuring the first plurality of waveguides and the second plurality of waveguides to interface with each other comprises, at each interaction stage of the plurality of interaction stages:
    for each pair of waveguides that are configured to interface at that interaction stage, reducing the gap between the waveguides in the pair, wherein when a first waveguide of the first plurality of waveguides is configured to interface with a second waveguide of the second plurality of waveguides, a gap between the first and second waveguide is reduced by bringing the first and second waveguide towards each other using vertical tapering.

FIG. 1

FIG. 2

EP 4 443 208 A1

FIG. 3

EP 4 443 208 A1

300

W(1)
V(N)
W(2)
V(N-1)
W(N/2-1)
V(N/2+2)
W(N/2)
V(N/2+1)

370
367
360
350
347
340
330
327
320
310

355
345
325

W(1)
V(N)
W(2)
V(N-1)
W(N/2-1)
V(N/2+2)
W(N/2)
V(N/2+1)

COUPLING WITHIN LAYER 1

COUPLING WITHIN LAYER 2

COUPLING BETWEEN LAYERS 1 AND 2

FIG. 4

22

FIG. 5

COUPLING WITHIN LAYER 1     COUPLING WITHIN LAYER 2     COUPLING BETWEEN LAYERS 1 AND 2

500

FORM A FIRST PLURALITY OF WAVEGUIDES ON A FIRST LAYER OF A SUBSTRATE WHEREIN A AT LEAST FIRST SOME OF THE FIRST PLURALITY OF WAVEGUIDES ARE FORMED TO INTERFACE WITH A NEIGHBOURING WAVEGUIDE AT A FIRST SOME INTERACTION STAGES

510

FORM A SECOND PLURALITY OF WAVEGUIDES ON A SECOND LAYER OF THE SUBSTRATE WHEREIN A AT LEAST FIRST SOME OF THE SECOND PLURALITY OF WAVEGUIDES ARE FORMED TO INTERFACE WITH A NEIGHBOURING WAVEGUIDE AT A SECOND SOME INTERACTION STAGES AND WHEREIN THE FIRST AND SECOND PLURALITY OF WAVEGUIDES ARE FORMED SUCH THAT A SECOND AT LEAST SOME OF THE FIRST PLURALITY OF WAVEGUIDES INTERFACE WITH AN ADJACENT WAVEGUIDE IN THE SECOND PLURALITY OF WAVEGUIDES AT A THIRD SOME INTERACTION STAGES

520

FIG. 6

Europäisches Patentamt

European Patent Office

Office européen des brevets

# EUROPEAN SEARCH REPORT

Application Number

EP 24 16 5082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/232963 A1 (GIMENO-SEGOVIA MERCEDES [US] ET AL) 29 July 2021 (2021-07-29) * paragraphs [0139] - [0141]; figure 14 * | 1-6,8-15 | INV. G02B6/12 G02B6/125 G06N10/40 |
| X | WO 2022/013466 A1 (UNIV VALENCIA POLITECNICA [ES]) 20 January 2022 (2022-01-20) * paragraphs [0047], [0067] - [0070]; figure 7 * -& EP 4 184 228 A1 (UNIV VALENCIA POLITECNICA [ES]) 24 May 2023 (2023-05-24) | 1-15 | |
| X | WO 2020/086744 A1 (UNIV CALIFORNIA [US]) 30 April 2020 (2020-04-30) * paragraphs [0066] - [0069]; figure 7 * | 1-3,5,6, 8-15 | |
| A | WO 2022/034038 A1 (OESTERREICHISCHE AKADEMIE DER WSS [AT] ET AL.) 17 February 2022 (2022-02-17) * page 35, lines 32-35; figure 4d * | 1-15 | |
| A | US 2021/389522 A1 (ROWE MARY A [US] ET AL) 16 December 2021 (2021-12-16) * paragraphs [0052], [0053]; figure 4 * | 1-15 | TECHNICAL FIELDS SEARCHED (IPC) G02B G06N |

The present search report has been drawn up for all claims

| Place of search | Date of completion of the search | Examiner |
|---|---|---|
| Berlin | 27 August 2024 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 5082

27-08-2024

| Patent document cited in search report | Publication date | Patent family member(s) | | Publication date |
|---|---|---|---|---|
| US 2021232963 A1 | 29-07-2021 | AU | 2021212265 A1 | 22-09-2022 |
| | | CA | 3167916 A1 | 05-08-2021 |
| | | CN | 115210723 A | 18-10-2022 |
| | | EP | 4097651 A1 | 07-12-2022 |
| | | JP | 2023512233 A | 24-03-2023 |
| | | KR | 20220143858 A | 25-10-2022 |
| | | US | 2021232963 A1 | 29-07-2021 |
| | | US | 2022383175 A1 | 01-12-2022 |
| | | US | 2023229949 A1 | 20-07-2023 |
| | | US | 2024160972 A1 | 16-05-2024 |
| | | WO | 2021155289 A1 | 05-08-2021 |
| WO 2022013466 A1 | 20-01-2022 | CA | 3185883 A1 | 20-01-2022 |
| | | CN | 116583771 A | 11-08-2023 |
| | | EP | 4184228 A1 | 24-05-2023 |
| | | ES | 2795820 A1 | 24-11-2020 |
| | | JP | 2023533842 A | 04-08-2023 |
| | | US | 2023251423 A1 | 10-08-2023 |
| | | WO | 2022013466 A1 | 20-01-2022 |
| EP 4184228 A1 | 24-05-2023 | CA | 3185883 A1 | 20-01-2022 |
| | | CN | 116583771 A | 11-08-2023 |
| | | EP | 4184228 A1 | 24-05-2023 |
| | | ES | 2795820 A1 | 24-11-2020 |
| | | JP | 2023533842 A | 04-08-2023 |
| | | US | 2023251423 A1 | 10-08-2023 |
| | | WO | 2022013466 A1 | 20-01-2022 |
| WO 2020086744 A1 | 30-04-2020 | NONE | | |
| WO 2022034038 A1 | 17-02-2022 | CA | 3190780 A1 | 17-02-2022 |
| | | EP | 3955035 A1 | 16-02-2022 |
| | | US | 2023305225 A1 | 28-09-2023 |
| | | WO | 2022034038 A1 | 17-02-2022 |
| US 2021389522 A1 | 16-12-2021 | CN | 113780567 A | 10-12-2021 |
| | | EP | 3923048 A1 | 15-12-2021 |
| | | US | 2021389522 A1 | 16-12-2021 |
| | | US | 2024126135 A1 | 18-04-2024 |

EPO FORM P0459

For more details about this annex : see Official Journal of the European Patent Office, No. 12/82